(19) **Europäisches Patentamt European Patent Office Office européen des brevets**

(11) **EP 3 822 231 B1**

(12) **EUROPÄISCHE PATENTSCHRIFT**

(45) Veröffentlichungstag und Bekanntmachung des Hinweises auf die Patenterteilung:
**19.03.2025 Patentblatt 2025/12**

(21) Anmeldenummer: **20020428.7**

(22) Anmeldetag: **23.09.2020**

(51) Internationale Patentklassifikation (IPC):
**C02F 1/48** (2023.01)  C02F 103/16 (2006.01)
C02F 103/32 (2006.01)  C02F 103/44 (2006.01)

(52) Gemeinsame Patentklassifikation (CPC):
**C02F 1/487;** C02F 2103/16; C02F 2103/32;
C02F 2103/327; C02F 2103/44; C02F 2201/4613;
C02F 2201/46135; C02F 2201/4615;
C02F 2201/46175; C02F 2303/04

(54) **VERFAHREN ZUR MIKROBIELLEN DESINFEKTION WASSERBASIERTER DISPERSION MIT FLÜSSIGEN UND/ODER FESTEN INHALTSSTOFFEN MITTELS HOCHSPANNUNGSIMPULSEN**

METHOD FOR THE MICROBIAL DISINFECTION OF WATER-BASED DISPERSIONS WITH LIQUID AND / OR SOLID INGREDIENTS USING HIGH VOLTAGE PULSES

PROCÉDÉ DE DÉSINFECTION MICROBIENNE D'UNE DISPERSION À BASE D'EAU À L'AIDE DES INGRÉDIENTS LIQUIDES ET/OU SOLIDES AU MOYEN DES IMPULSES HAUTE TENSION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.11.2019 DE 102019130510**

(43) Veröffentlichungstag der Anmeldung:
**19.05.2021 Patentblatt 2021/20**

(73) Patentinhaber: **Karlsruher Institut für Technologie 76131 Karlsruhe (DE)**

(72) Erfinder:
• **Frey, Wolfgang**
 **76137 Karlsruhe (DE)**
• **Gusbeth, Christian**
 **76344 Eggenstein-Leopoldshafen (DE)**

(56) Entgegenhaltungen:
 EP-A1- 2 543 254  DE-A1- 102005 019 700
 US-A1- 2016 031 728

• **SOBRINO-LOPEZ A ET AL: "High-Intensity Pulsed Electric Field Variables Affecting Staphylococcus aureus Inoculated in Milk", JOURNAL OF DAIRY SCIENCE, AMERICAN DAIRY SCIENCE ASSOCIATION, US, vol. 89, no. 10, 1 October 2006 (2006-10-01), pages 3739 - 3748, XP026957217, ISSN: 0022-0302, [retrieved on 20061001]**
• **FREY WOLFGANG ET AL: "Inactivation ofPseudomonas putidaby Pulsed Electric Field Treatment: A Study on the Correlation of Treatment Parameters and Inactivation Efficiency in the Short-Pulse Range", JOURNAL OF MEMBRANE BIOLOGY, SPRINGER NEW YORK LLC, US, vol. 246, no. 10, 10 May 2013 (2013-05-10), pages 769 - 781, XP035326803, ISSN: 0022-2631, [retrieved on 20130510], DOI: 10.1007/S00232-013-9547-6**

**Beschreibung**

Die Erfindung betrifft ein Verfahren zur mikrobiellen Desinfektion wasserbasierter Dispersion mit flüssigen und/oder festen Inhaltsstoffen, wie bspw. Elektrotauchlacke, mittels Hochspannungsimpulsen. Insbesondere ein Verfahren, mit dem Mikroben, wie bspw. Bakterien, Algen und Pilzsporen, die sich in wasserbasierter Dispersion mit flüssigen und/oder festen Inhaltsstoffen, wie bspw. Elektrotauchlack, befinden, zumindest teilweise abgetötet werden können. Dabei ermöglicht das Verfahren, dass sich der Elektrotauchlack gegenüber konventionellen Lösungen langsamer bzw. nicht an den Elektroden abscheidet. Darüber hinaus können die Standzeiten der Elektroden gegenüber solchen konventionellen Lösungen gesteigert werden. D.h. dass mit einem erfindungsgemäßen Verfahren die Elektroden-Korrosion verringern bzw. vermeiden lässt und somit eine gleichbleibende Effizienz bzw. eine länger anhaltende Effizienz der Elektroden gewährleistet werden kann. Wobei dabei die chemischen Eigenschaften des Mediums bzw. dessen pH-Wert unverändert bleibt und das Verfahren mit geringen Nettostrom durchführbar.

Hierbei ist zwischen zwei Vorgängen zu unterscheiden: Einmal verhindern bipolare Impulse mit jeweils einer positiven und negativen Teilladung, d.h. mit zwei Hochspannungsimpulshalbwellen entgegengesetzter Polarität, einen Lackauftrag auf den Elektroden der Behandlungszelle. Dies vermeidet die letztendliche Verstopfung der Behandlungszelle. Zum anderen verringern solche bipolaren Impulse auch die Elektrodenerosion. Somit verhindert ein erfindungsgemäßes Verfahren zwei Nachteile der Anwendung unipolarer Pulse: (1) Den Lackauftrag auf den Elektroden und (2) die Lackkoagulation durch eine bleibende elektrochemisch bedingte pH-Wert Verschiebung.

Der Nettostrom sollte bei einem erfindungsgemäßen Verfahren bevorzugt gleich Null sein. D.h. der Strom der in einer ersten Hochspannungsimpulshalbwelle fließt ist dem Strom in der zweiten Halbwelle vom Betrag her gleich, aber mit entgegengesetzten Vorzeichen bzw. Polarität.

In [1] wird bspw. ein Oberflächenbehandlungssystem für eine Elektrotauchlackierung, dass mit einer Anlage zur Keimreduktion ausgestattet werden kann, wobei diese bspw. mit einem Elektroporationsverfahren im Durchlauf (engl. by-pass) betrieben werden kann. Jedoch finden sich darin keine Angaben, wie ein solches Verfahren angepasst werden müsste, um die technischen Effekte eines erfindungsgemäßen Verfahrens zu realisieren.

Es finden sich verschiedene Quellen in der Literatur, die bereits Inaktivierungsverfahren basierend auf die Elektroimpulsbehandlung offenbaren und die teilweise auch bipolare Impulse als mögliche Impulsform zur Keimreduktion behandeln. In [2] wird bspw. ein solches Inaktivierungsverfahren offenbart, wobei hier auch bipolare Impulsformen erwähnt werden. Jedoch wird hierin nur die Effizienz für die Keimreduktion verschiedener Pulsformen beschrieben ohne dabei eine Spezifikation für die Anwendung solcher Impulsformen bei Elektrotauchlacken zu liefern. In [3] wird bspw. lediglich die Effizienz der Elektroimpulsbehandlung mit unipolaren und bipolaren exponentiell abfallenden Impulsen verglichen. In [4] wird nur die Möglichkeit einer Nutzung von bipolaren Impulsen zur Entkeimung von Flüssigkeiten mittel Elektroimpulsbehandlung erwähnt, wobei auch hier wiederum kein Hinweis findet, wie ein Verfahren für Elektrotauchlacke angepasst werden müsste, um einerseits eine Keimreduktion zu ermöglichen und andererseits ein Abscheiden von Elektrotauchlack an den Elektroden zu verringern oder zu vermeiden. In [5] wird gezeigt, dass die Freisetzung von Metall-Ionen, $Al^{3+}$ und $Fe^{2+/3+}$ aus den Aluminium- bzw. Edelstahl-Elektroden durch Anwendung von unipolaren Rechteckimpulse um eine Größenordnung höher ist als bei der Anwendung von bipolaren Rechteckimpulse. Die freigesetzten Ionen können zur Kontamination der behandelten Flüssigkeit beitragen. Des Weiteren wird bei der Anwendung von bipolaren Impulsen eine geringere Korrosion der Metallelektroden nachgewiesen. Einen Hinweis auf die Änderung der chemischen Eigenschaften des Mediums oder des pH durch die Anwendung unipolaren bzw. bipolaren Impulse wird nicht erwähnt. Auch die Notwendigkeit eines sehr geringen Nettostroms (bei der Anwendung von bipolaren Impulsen) zur Vermeidung von pH Änderungen oder Akkumulation von Nettoladungen wird nicht erwähnt.

Im Stand der Technik finden sich weitere Patentschriften, die sich mit bipolaren Impulsen beschäftigen. Jedoch liefert keine dieser Schriften einen oder mehrere Hinweise darauf, welche Spezifikationen für die Anwendung der Elektroimpulshandlung bei Elektrotauchlacken notwendig sind, um eine effiziente Keimreduktion bei verringerter bzw. vermiedener Abscheidung von Elektrotauchlack an den Elektroden ohne dabei die chemischen Eigenschaften bzw. den pH-Wert des Elektrotauchlacks zu verändern und mit geringem Nettostrom zu realisieren. In [6] wird ein Verfahren zur Entfernung von Legionellen aus wässrigen Strömen mittels Elektroimpulsbehandlung mit bipolaren Impulsen offenbart, wobei hierzu deutlich geringere Feldstärken notwendig sind, die für das erfindungsgemäße Verfahren nicht ausreichend sind, wobei darüber hinaus keine Spezifikation hinsichtlich Nettostrom hierzu erwähnt wird. In [7] wird Verfahren zur Entfernung von Protozoen, insbesondere freien Amöben, aus einem Wasserstrom, bzw. zur Behandlung eines Wasserstroms mittels Elektroimpulsbehandlung mit bipolaren Impulsen offenbart. Auch hierin sind die offenbarten Feldstärken zu gering, um für ein erfindungsgemäßes Verfahren in Frage zu kommen. In [8] wird ein Verfahren zur Behandlung eines Wasserstromes durch elektrische Pulse mit einem Feld parallel zur Strömung, Pulskammer und Anwendungen offenbart, jedoch keine bipolaren Impulse. Dieses Verfahren beschreibt ausschließlich unipolare, parallele Impulse. **[9]** offenbart lediglich ein Verfahren zur Herstellung von Proteinen durch Elektroimpulsbehandlung mittels bipolarer Impulse. Jedoch schweigt **[9]** bzgl. Inaktivierung bzw. Keimreduktion mittels Elektroimpulsbehandlung. In **[10]** wird eine Flüssigkeitsbehandlungsvorrichtung und -verfahren offenbart, bei der/dem ausschließlich hochfrequente Wechselspannung angelegt wird. In **[11]** wird eine nicht-thermische Desinfektion von biologischen Flüssigkeiten unter Verwendung von nicht-thermischen Plasma offenbart, jedoch keine Elektroimpulsbehandlung. In **[12]** sind ein Verfahren zur Behandlung gepulster elektrischer Felder und ein mit dem Verfahren hergestelltes Milchprodukt mittels bipolarer Impulse offenbart. Dabei wird die Entkeimung von flüssigen Milchprodukten beschrieben, wobei diese ohne industrielle Ströme sowie mit geringerer Leistung realisiert wird. In **[13]** wird eine koaxiale Behandlungskammer für die Keimreduktion mittels gepulsten elektrischen Felder offenbart. Diese Impulse können eine Serie von alternativen Rechteckimpulse mit keinem oder geringen Zeitintervall zwischen den Impulsen sein. Darüber hinaus weichen die Impulsspezifikationen deutlich, aufgrund ihres Anwendungsbereichs, von denen eines erfindungsgemäßen Verfahrens ab.

Die wissenschaftliche Publikation [16] offenbart, dass in Systemen mit gepulsten elektrischen Feldern zur Konservierung von flüssigen Lebensmitteln elektrochemische Reaktionen auftreten können, die zu Korrosion der Elektroden und zur Einführung von Partikeln in die Flüssigkeit führen. Weiterhin werden diese Phänomene beschrieben und es wird gezeigt, dass durch Anpassung des Designs und der Impulsform die Korrosion minimiert werden kann. Die darin offenbarten Experimente bestätigen die Theorie, dass kurze Impulse und das Vermeiden kumulativer Ladungen (z.B. durch bipolare Impulse) die Korrosion begrenzen.

Keine der zuvor beschriebenen Schriften offenbart ein Verfahren zur mikrobiellen Desinfektion von wasserbasierter Dispersion mit flüssigen und/oder festen Inhaltsstoffen, bspw. Elektrotauchlacken, mittels Hochspannungsimpulsen, welches die Kontaminierung des Elektrotauchlacks durch Mikroben (abtöten kann) verringern oder diese entfernen kann und es dabei ermöglicht, eine elektrochemische Abscheidung des Elektrotauchlacks an den Elektroden zu vermeiden bzw. zu verringern und darüber hinaus die chemischen Eigenschaften des Mediums bzw. dessen pH-Wert unverändert bleibt, so dass die Beschichtungsqualität des Elektrotauchlacks unverändert bleibt.

Somit ergibt sich die objektive technische Aufgabe ein Verfahren zur mikrobiellen Desinfektion von wasserbasierter Dispersion mit flüssigen und/oder festen Inhaltsstoffen mittels Hochspannungsimpulsen bereitzustellen, welches es ermöglicht Standzeiten der Elektroden zu steigern, die Beschichtungsqualität des Elektrotauchlacks beizubehalten und energieeffizient betreibbar zu sein.

Diese zuvor genannte objektiv technische Aufgabe wird mit dem hierin offenbarten Verfahren gemäß dem Gegenstand des ersten unabhängigen Anspruchs 1 gelöst. Hierauf bezogene Neben- bzw. Unteransprüche geben vorteilhafte Ausgestaltungen bzw. Ausführungsformen wieder. Vorteilhafte Weiterbildungen, welche einzeln oder in beliebiger Kombination realisierbar sind, sind in den abhängigen Ansprüchen dargestellt.

Im Folgenden werden die Begriffe "aufweisen", "umfassen" oder "einschließen" oder beliebige grammatikalische Abweichungen davon in nicht-ausschließlicher Weise verwendet. Dementsprechend können sich diese Begriffe sowohl auf Situationen beziehen, in welchen, neben den durch diese Begriffe eingeführten Merkmalen, keine weiteren Merkmale vorhanden sind, oder auf Situationen, in welchen ein oder mehrere weitere Merkmale vorhanden sind. Beispielsweise kann sich der Ausdruck "A weist B auf", "A umfasst B" oder "A schließt B ein" sowohl auf die Situation beziehen, in welcher, abgesehen von B, kein weiteres Element in A vorhanden ist (d.h. auf eine Situation, in welcher A ausschließlich aus B besteht), als auch auf die Situation, in welcher, zusätzlich zu B, ein oder mehrere weitere Elemente in A vorhanden sind, beispielsweise Element C, Elemente C und D oder sogar weitere Elemente.

Weiterhin wird darauf hingewiesen, dass die Begriffe "mindestens ein" und "ein oder mehrere" sowie grammatikalische Abwandlungen dieser Begriffe, wenn diese in Zusammenhang mit einem oder mehreren Elementen oder Merkmalen verwendet werden und ausdrücken sollen, dass das Element oder Merkmal einfach oder mehrfach vorgesehen sein kann, in der Regel lediglich einmalig verwendet werden, beispielsweise bei der erstmaligen Einführung des Merkmals oder Elementes. Bei einer nachfolgenden erneuten Erwähnung des Merkmals oder Elementes wird der entsprechende Begriff "mindestens ein" oder "ein oder mehrere" in der Regel nicht mehr verwendet, ohne Einschränkung der Möglichkeit, dass das Merkmal oder Element einfach oder mehrfach vorgesehen sein kann.

Weiterhin werden im Folgenden die Begriffe "vorzugsweise", "insbesondere", "beispielsweise (bspw.)" oder ähnliche Begriffe in Verbindung mit optionalen Merkmalen verwendet, ohne dass alternative Ausführungsformen hierdurch beschränkt werden. So sind Merkmale, welche durch diese Begriffe eingeleitet werden, optionale Merkmale, und es ist nicht beabsichtigt, durch diese Merkmale den Schutzumfang der Ansprüche und insbesondere der unabhängigen Ansprüche einzuschränken. So kann die Erfindung, wie der Fachmann erkennen wird, auch unter Verwendung anderer Ausgestaltungen durchgeführt werden. In ähnlicher Weise werden Merkmale, welche durch "in einer Ausführungsform" oder durch "in einer weiteren Ausführungsform" eingeleitet werden, als optionale Merkmale verstanden, ohne dass hierdurch alternative Ausgestaltungen oder der Schutzumfang der unabhängigen Ansprüche eingeschränkt werden soll. Weiterhin sollen durch diese einleitenden Ausdrücke sämtliche Möglichkeiten, hierdurch eingeleitete Merkmale mit anderen Merkmalen zu kombinieren, seien es optionale oder nicht-optionale Merkmale, unangetastet bleiben.

In einer ersten Ausführungsform umfasst ein Verfahren zur mikrobiellen Desinfektion einer wasserbasierter Dispersion mit flüssigen und/oder festen Inhaltsstoffen: Bereitstellen von mindestens zwei Elektroden, die derart zueinander angeordnet sind, dass zwischen ihnen die Dispersion ein- oder durchleitbar ist; Ein- oder Durchleiten der Dispersion zwischen die Elektroden; Und Beaufschlagen der Elektroden mit einer zuvor wählbaren elektrischen Potentialdifferenz derart, dass eine Folge von zumindest zwei elektrischen Hochspannungsimpulshalbwellen gegensätzlicher Polarität zwischen den Elektroden durch die Dispersion gebildet wird, wobei: die Hochspannungsimpulshalbwellen über die Potentialdifferenz jeweils mittels zuvor wählbarer Impulsform, Impulsdauer, Impulsamplitude und Repetitionsfrequenz anpassbar sind, die Impulsdauer in einem Bereich von 200 ns bis zu 10 $\mu$s und die Impulsamplitude in einem Bereich von 10 kV/cm bis zu 100 kV/cm sowie die Repetitionsfrequenz in einem Bereich von 1 Hz bis 100 kHz gewählt wird, die Hochspannungsimpulshalbwellen in der Folge derart gebildet werden, dass die Abweichung zwischen dem Gesamtbetrag der positiven und negativen Teilladungen höchstens 10 % beträgt bezogen auf den jeweils größeren Teilladungsbetrag von positiven und negativen Teilladungen, und der zeitliche Abstand zwischen zwei Hochspannungsimpulshalbwellen höchstens die 10-fache Dauer der ersten Hochspannungsimpulshalbwelle beträgt. "Optional kann bei der Behandlung mit bipolaren Hochspannungspulsen eine Anpassung der zweiten Impulshalbwelle an die erste Impulshalbwelle derart erfolgen, dass die geflossene Gesamtladung von positivem und negativem Teilimpuls $Q = Q^+ + Q^-$ vorzugsweise gleich Null ist, d.h. dass vorzugsweise $Q^+ + Q^- = 0$ bzw. $Q = 0$ gelten soll."

In einer weiteren Ausführungsform beträgt ferner die Abweichung zwischen dem Gesamtbetrag der positiven und negativen Teilladungen höchstens 5%.

In einer weiteren Ausführungsform beträgt ferner die Abweichung zwischen dem Gesamtbetrag der positiven und negativen Teilladungen 0%. D.h. die Beträge der beiden Teilladungen (positive und negative) sind gleich.

In einer weiteren nicht erfindungsgemäßen Ausführungsform ist ferner eine Relation zwischen Repetitions-

$$f = \emptyset \cdot \frac{W}{W_1} \cdot \frac{1}{V_0}$$

frequenz (f) und Durchfluss (Ø) der Dispersion zwischen den Elektroden gegeben durch:                              . Wobei W die spezifische Behandlungsenergie ist, $W_1$ die spez. Energie eines Impulses und $V_0$ das Behandlungsvolumen der Behandlungskammer.

In einer weiteren Ausführungsform ist ferner der zeitliche Abstand zwischen zwei Hochspannungsimpulshalbwellen gleich 0.

In einer weiteren Ausführungsform ist ferner die Dispersion ein Elektrotauchlack für die kathodische und anodische Tauchlackierung.

In einer weiteren Ausführungsform umfasst ferner die Dispersion mit flüssigen und/oder festen Inhaltsstoffen zumindest ein Medium aus der Gruppe von Dispersionen bzw. ist daraus gebildet, wobei diese Gruppe umfasst: Kühlwasser, Entionisiertes bzw. vollentionisiertes (VE) Wasser, industrielles Wasser, Abwasser, Spülwasser aus Waschanlagen, flüssige Lebensmittel, Trinkwasser, Milch, Saft oder Suppen.

Vorteile des hierin beschriebenen Verfahrens sind bspw. die Elektroimpulsbehandlung zur Desinfektion bzw. Keimreduktion in Elektrotauchlackierbädern einzusetzen und dabei die Lackabscheidung auf den Elektroden der Behandlungszelle durch Anwendung einer bestimmten Impulsform zu vermeiden bzw. zu verringern.

Ein solches erfindungsgemäßes Verfahren umfasst dabei

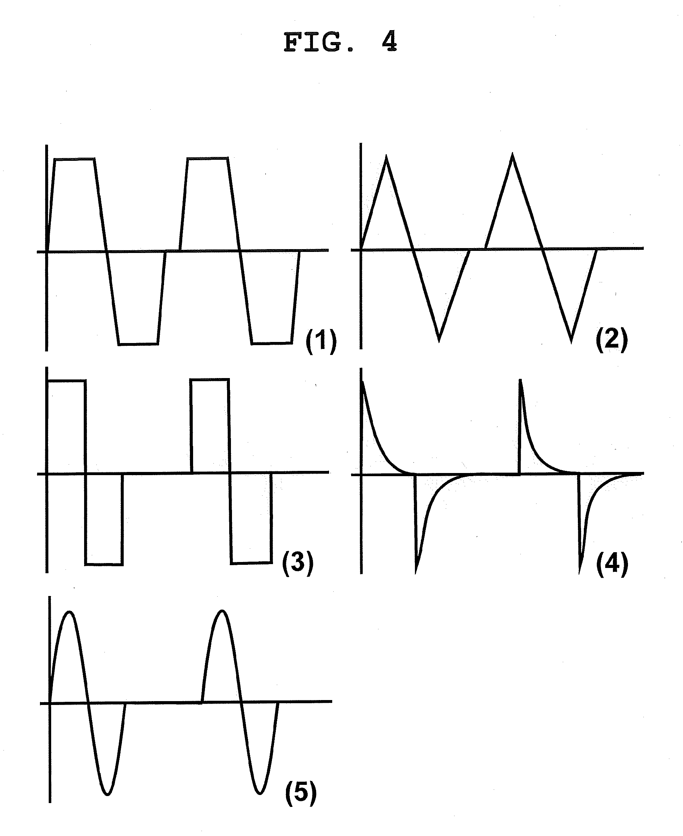

Die Anwendung von bipolaren Hochspannungsimpulsen (rechteckförmige oder andere Impulsformen, vgl. **FIG. 4)** zur Keimreduktion in Elektrotauchbädern mit einer Impulsdauer der Hochspannungsimpulshalbwelle in einem Bereich von 200 ns bis zu 10 $\mu$s. Die bipolare Impulsform muss so gewählt werden, dass die geflossene Gesamtladung von positivem ($Q^+$) und negativem ($Q^-$) Teilimpuls $Q = Q^+ + Q^-$ vorzugsweise gleich Null ist oder die Abweichung der Beträge von $Q^+$ und $Q^-$ von positivem und negativem Teilimpuls weniger als 5% beträgt, bezogen auf den größeren Betrag aus $Q^+$ und $Q^-$. Durch Erzeugung von bipolaren Impulsen mit sehr geringer Abweichung (positiv vs. negativ) im Ladungsfluss, wird die Ackumulation von Nettoladung an den Elektroden geringgehalten. Durch die Umkehr der Spannung (d.h. durch Anwendung von bipolaren Impulsen), werden an den Elektroden gegensätzlich geladene Ionen erzeugt, die die bereits erzeugten, bestehenden Ionen neutralisieren, so dass die elektrochemischen Vorgänge der Lackabscheidung verhindert werden. Die Impulsdauer der Teilimpulse ist dabei so kurz zu wählen (d.h. < 10 $\mu$s), dass die Akkumulation von Hydroxid- und Oxonium-Ionen durch Wegspülen im Durchflussbetrieb verhindert wird. Dadurch wird sich der pH-Wert an den Elektroden nur geringfügig bis gar nicht verändern und in Folge werden die Lackabscheidung an den Elektroden der Behandlungszelle und die Bildung von Koagulaten im Lack verhindert. Die Inaktivierungseffizienz wird durch die Wahl der Impulsdauern (Teilimpulse 200 ns < Teilimpulsdauer < 10 $\mu$s) und der Impulsamplituden (IEI > 10 kV/cm) nicht beeinträchtigt.

Es können folgende Medien dabei mittels eines erfindungsgemäßen Verfahrens behandelt werden: Elektrotauchlack, andere wässrige Flüssigkeiten wie Kühlwasser, VE-Wasser, industrielles Wasser, Abwasser, Spülwässer aus Waschanlagen, flüssige Lebensmittel (bspw. Getränke aller Art etc.), Saft, Suppen, Milch bzw. Milchprodukte, etc.

Es können folgende Impulsform angewendet werden: bipolar, wobei beliebige Teilimpulsformen anwendbar sind.

Die tatsächlich geflossene Gesamtladung der positiven und negativen Teilladungen während eines bipolaren Impulses, d.h. der beiden Hochspannungsimpulshalbwellen, ist bevorzugt gleich Null. Dabei kann eine Folge von bipolaren Impulsen mit einer Impulsfolgefrequenz bis in den kHz Bereich angewandt werden.

Die Abweichung $\Delta Q = |Q^+ - |Q^-||$ darf maximal 10 %, bevorzugt 5 %, betragen, bezogen auf den größeren Teilladungsbetrag, wobei bevorzugt gelten soll $|Q^+|=|Q^-|$, d.h. dass die beiden Teilladungen der Hochspannungsimpulshalbwellen den gleichen Betrag aufweisen.

Die Impulsdauer liegt in einem Bereich von ungefähr 0,2 $\mu$s bis zu ungefähr 10,0 $\mu$s und die Impulsamplitude in einem Bereich von ungefähr 10 kV·cm$^{-1}$ bis zu ungefähr 100 kV·cm$^{-1}$.

Die Pausenzeit (Zeitintervall, $\Delta$t) zwischen der ersten (z. B. positiven) und der zweiten Halbwelle (z. B. negative) soll nicht länger als das 10-fache der Impulsdauer sein (z.B. bei einer Impulsdauer von 1 $\mu$s soll das Intervall $\Delta$t bzw. die Dauer zwischen der ersten Halbwelle und der zweiten Halbwelle kleiner als 10 $\mu$s sein), bevorzugt beträgt die Dauer zwischen der ersten Halbwelle und der zweiten Halbwelle 0 s.

Elektroden für das hierin beschriebene Verfahren können dabei zumindest ein elektrisch leitfähiges Material aus der Gruppe von Elektrodenmaterialien aufweisen bzw. zumindest teilweise daraus gebildet sein, wobei die Gruppe umfasst: Metall, Kupfer, Aluminium, Stahl, Edelstahl, Grafit, Gold, Silber, Platin, oder eine Legierung hiervon bzw. eines der zuvor genannten Materialien, welches Diamant- oder Titanbeschichtet ist. Dabei können die Elektrodenoberflächen optional chemisch passiviert sein.

Der Durchfluss des Elektrotauchlacks zwischen den Elektroden kann laminar oder turbulent sein.

Die elektrische Ladung ($Q^1$) die während einer Hochspannungsimpulshalbwelle fließt ist durch das Integral des Stromflusses ($I_1$) gegeben:

$$Q^1 = \int_0^{\Delta t_1} I_1 \, dt \qquad\qquad (1)$$

Die elektrische Ladung die während der zweite Hochspannungsimpulshalbwelle ($Q^2$) fließt ist gegeben durch:

$$Q^2 = \int_0^{\Delta t_2} I_2 \, dt, \qquad\qquad (2)$$

wobei $I_2$ der Stromfluss der zweiten Halbwelle ist.

Die zweite Hochspannungsimpulshalbwelle muss so gewählt werden, dass die geflossene Gesamtladung (Q) des ersten und zweiten Teilimpulses $Q = Q^1 + Q^2$ idealerweise gleich Null ist, oder die Abweichung der Beträge von $Q^1$ und $Q^2$ von erstem und zweitem Teilimpuls weniger als 10% beträgt, bezogen auf den größeren Betrag aus $Q^1$ und $Q^2$. Entspricht der Bedingung:

$$Q = |Q^1| - |Q^2| \leq 0{,}10 \qquad\qquad (3)$$

Oder:

$$\frac{|Q^1| - |Q^2|}{max(Q^1, Q^2)} \cdot 100 \leq 10\% \qquad\qquad (4)$$

Führt zu der Gleichung:

$$Q^1 = \int_0^{\Delta t} I_1 \, dt \cong Q^2 = \int_0^{\Delta t} I_2 \, dt, \qquad\qquad (5)$$

Zur Abhängigkeit der spez. Behandlungsenergie von Frequenz und Durchfluss:
Um eine hohe Entkeimungseffizienz der Elektroimpulsbehandlung auch im Durchfluss-Verfahren zu gewährleisten (oberhalb von 1 log Stufe Reduktion; d.h. mehr als 90% abgetötet), muss die eingetragene spezifische Behandlungsenergie (W), in der Regel, oberhalb von 40 J·ml$^{-1}$ sein. Bei sehr hohen Durchflüssen (mehr als 100 Liter (l) pro Stunde (h)) wird dieser Eintrag nur durch eine hohe Impulsrepetitionsfrequenz (f) gewährleistet. Der Zusammenhang zwischen dem Durchfluss (Ø) und Frequenz wird im Folgenden beschrieben. Der Durchfluss ist gegeben durch:

$$\emptyset = \dot{V} = \frac{dV}{dt}; \qquad\qquad (6)$$

wobei V das Volumen und t die Zeit repräsentiert.

Unter der Annahme, dass die mittlere Verweilzeit (<T>) einer infinitesimalen Volumeneinheit in der Behandlungszelle, mit dem Volumen $V_0$, bei einem nichtlaminaren Fluss durch folgende Gl. gegeben wird:

$$\langle T \rangle = \frac{V_0}{\emptyset}; \qquad\qquad (7)$$

ergibt sich somit für die mittlere Anzahl der Impulse (<N>) die eine infinitesimalen Volumeneinheit, während des Durchflusses durch die Behandlungskammer, erhält:

$$\langle N \rangle = f \cdot T = f \cdot \frac{V_0}{\emptyset}; \qquad\qquad (8)$$

Die gesamte spezifische Behandlungsenergie (W) ist das Produkt zwischen Anzahl der Impulse und der Energie eines Impulses:

$$W = W_1 \cdot \langle N \rangle ; \qquad\qquad (9)$$

Aus der Gl. (1) -(4) folgt für die spez. Behandlungsenergie:

$$W = W_1 \cdot f \cdot \frac{V_0}{\emptyset}; \qquad\qquad (10)$$

Man sieht aus Gl. **(10),** dass die spez. Behandlungsenergie bei einer Verdopplung des Durchflusses, durch die Verdopplung der Frequenz oder der spez. Energie eines Einzelimpulses möglich ist, jedoch auch durch die gleichzeitige Erhöhung (Anpassung) der Impulsenergie und Frequenz.

In einem erfindungsgemäßen Verfahren können Durchflüsse in einem Bereich von 2 l/h bis zu 100 m$^3$/h behandelt werden.

Mikroben, die mittels eines erfindungsgemäßen Verfahrens veringerbar bzw. entfernbar sind, sind bspw. Bakterien, Algen und Pilzsporen.

Bevor eine Karoserie oder andere Güter eine Farbdecklackschicht erhalten, muss die Oberfläche gereinigt und vorbehandelt werden. Zudem erhält sie eine Schicht, die vor Korrosion schützt. Das geschieht in der Oberflächenvorbehandlung und in der elektrophoretischen Tauchlackierung. Letzteres ist ein elektrochemisches Verfahren, das über ein Gleichspannungsfeld im Elektrotauchbecken einen gleichmäßigen Lack Film ermöglicht. In den verwendeten Wässern und Lacken können sich jedoch Bakterien so vermehren, dass sie die Oberflächenbeschichtung beeinträchtigen. Um die Bakterienfracht zu reduzieren kann die gepulste Hochspannungstechnologie, als Alternative zu Biozid-Konservierung, eingesetzt werden. Das zu behandelnde Medium wird durch eine Behandlungszelle, bestehend aus zwei gegenüberliegenden Elektroden und einem Kunststoffgehäuse, gepumpt. An die Elektroden werden kurze Hochspannungsimpulse angelegt. Der dadurch erzeugte Feldstärkeimpuls im Medium bewirkt Elektroporation der Zellmembran. In Folge der Elektroporation sterben die Bakterien ab. Dies wird auch als irreversible Elektroporation bezeichnet, wobei die Elektroporation alle erzeugten Poren beinhaltet, d.h. sowohl reversible (Poren, die wieder schließen) als auch irreversible Poren.

Jedoch, bei der Anwendung der Elektroimpulsbehandlung in Elektrotauchlacken besteht die Gefahr der elektrochemischen Lackabscheidung auf den Elektroden der Behandlungszelle und der Koagulation von Lackpartikeln im Lack, welche aufgrund folgender Vorgänge entstehen: Bei Anlegen einer Spannung in wässrigen Flüssigkeiten entstehen durch die Dissoziation von Wasser Hydroxid- (OH$^-$) und Oxonium-Ionen (H$_3$O$^+$) die zur Anode bzw. Kathode wandern und dort akkumulieren. Dadurch ändert sich der pH in der unmittelbaren Nähe der Elektroden-Oberfläche. Diese pH Änderung führt einerseits zur elektrochemischen Lackabscheidung an der Elektrode oder zur Bildung von Lackkoagulaten im Lack. Eine Lackschicht auf den Behandlungselektroden würde die Inaktivierungseffizienz reduzieren und zusätzlich die Anwendungsdauer der Elektrode stark verkürzen. Eine elektrochemische Koagulation des Lackes, infolge der Elektroimpulsbehandlung, würde die Oberflächenbeschichtung beeinträchtigen und die Behandlungszelle blockieren. Unser Verfahren soll die Lackabscheidung auf der Behandlungselektrode verhindern, ohne die Inaktivierungseffizienz und die Zusammensetzung des Lackes zu beeinträchtigen (d.h. keine chemische Veränderung, bzw. Koagulation des Lackes hervorrufen).

Der Vorteil eines erfindungsgemäßen Verfahrens besteht darin, die Elektroimpulsbehandlung zur Keimreduktion in Tauchlackierbädern einzusetzen und dabei die Lackabscheidung auf den Elektroden der Behandlungszelle durch Anwendung einer bestimmten Impulsform zu vermeiden bzw. zu verringern.

Wesentliche Merkmale der Erfindung umfassen: Die Anwendung von bipolaren Impulsen (rechteckförmige oder andere Impulsformen) zur Keimreduktion in Elektrotauchbädern mit einer Impulsdauer der Einzelimpulse ab 200 ns bis 10 μs. Die bipolare Impulsform muss so gewählt werden, dass die geflossene Gesamtladung von positivem und negativem Teilimpuls Q = Q$^+$ + Q$^-$ idealerweise gleich Null ist, oder die Abweichung der Beträge von Q$^+$ und Q$^-$ von positivem und negativem Teilimpuls weniger als 10 %, bevorzugt weniger 5 % beträgt, bezogen auf den größeren Betrag aus Q$^+$ und Q$^-$

(siehe oben) .

Werden unipolare Impulse (mit beliebiger Impulsform) eingesetzt, wie größtenteils üblich, kommt es zur ungewollten Farbabscheidung auf den Elektroden der Behandlungszelle, was den Elektrotauchlack schädigt und letztendlich die Behandlungskammer blockiert.

Zur Vermeidung von Lackabscheidung an den Elektroden und zur Vermeidung der Bildung von Lackkoagulaten in dem Lack werden folgende wesentliche Mechanismen genutzt: (1) Die Wahl der Impulsdauer ist so kurz (d.h. unter 1 $\mu$s), dass die Akkumulation von Hydroxid- und Oxonium-Ionen, durch Wegspülen im Durchfluss verhindert wird. Dadurch wird eine pH Änderung an den Elektroden und im Medium verhindert. (2) Durch Umkehr der Spannung während eines Impulses (d.h. durch Anwendung von bipolaren Impulsen), werden an den Elektroden Ionen mit gegensätzlicher Ladung erzeugt, die die bereits vorhandenen Ionen neutralisieren, so dass die transienten Vorgänge der Lackabscheidung verhindert werden. (3) Durch Erzeugung von bipolaren Impulsen mit sehr geringer Abweichung in der Gesamtladung (positive Ladung vs. negative Ladung) wird die Akkumulation von einer Nettoladung an den Elektroden geringgehalten oder vermieden. (4) Die Inaktivierungseffizienz wird durch die Wahl der Impulsdauer (bipolar ab 200 ns) und Impulsamplituden (ab 10 kV/cm) nicht beeinträchtigt. (5) Durch die schnelle Umkehrung der Spannung in einem Intervall $\Delta$t, nicht länger als das 10-fache der Impulsdauer einer Halbwelle, bevorzugt gegen Null, so dass die akkumulierten Ladungen durch gegensätzliche Ladungen kompensiert werden, bevor die Abscheidungsbedingung erreicht wurde (od. die Reaktion angesetzt hat).

Das Verfahren ermöglicht die Anwendung der Elektroimpulsbehandlung zur mikrobiellen Desinfektion von Elektrotauchlacken bei gleichbleibender Inaktivierungseffizienz, ohne eine Beeinträchtigung der Lackqualität und ohne unerwünschte Beschichtung der Elektrodenoberfläche in der Behandlungszelle.

Hierbei zeigt sich die Anwendung von bipolaren Impulsen zur Keimreduktion in Elektrotauchlack mit dem Merkmal, dass die geflossene Gesamtladung während eines bipolaren Impulses gleich Null oder sehr gering ist, die Abweichung zwischen den geflossenen Ladungen während der Teilimpulse jedoch kleiner als 10 %, bevorzugt kleiner als 5 %, bezogen auf den größeren Teilladungsbetrag ist, als vorteilhaft.

Für die Keimreduktion in Elektrotauchlacken gibt es bis dato keine alternativen physikalischen Behandlungsmethoden, die die Qualität des Lackes, und damit die fehlerfreie Beschichtung des Lackierguts gewährleisten. Thermische Behandlungsmethoden führen zur Koagulation des Lackes, UV-Behandlung und Ultraschall Behandlung führen zur chemischen Degradation. Die Keimabtötung mittels Elektroimpulsbehandlung, die auf dem Phänomen der Elektroporation der Zellmembran basiert, ist zurzeit die einzige bekannte physikalische Behandlungsmethode, die auch in trüben Medien wirkungsvoll ist (Keimreduktionen von mehr als 3 log Stufen; bakterielle Abtötung von > 99.9 %) und keine direkte Wirkung auf die Molekülstruktur im zu behandelnden Medium hat. Darüber hinaus werden keine gegen die Behandlung resistente Bakterien induziert, wie es bei chemischen Behandlungen oder UV-Bestrahlung der Fall ist.

Durch Anwendung von bipolaren Impulsen mit einer sehr geringen oder verschwindenden geflossenen Gesamtladung während des bipolaren Impulses wird gewährleistet, dass keine bleibende pH Änderung im Lack oder an den Behandlungselektroden induziert wird. Somit findet keine Lackabscheidung an den Elektroden oder Lacckoagulation statt. Die erzeugten Nettoladungen sind so gering, dass diese durch den Materialfluss (Durchfluss in der Behandlungskammer) weiter verdünnt werden und somit die chemischen Eigenschaften des Lackes nicht verändert werden.

## Kurzbeschreibung der Figuren

Weitere Einzelheiten und Merkmale der vorliegenden Erfindung ergeben sich aus der nachfolgenden Beschreibung eines bevorzugten Ausführungsbeispiels, insbesondere in Verbindung mit den abhängigen Ansprüchen. Hierbei können die jeweiligen Merkmale für sich alleine oder zu mehreren in Kombination miteinander verwirklicht sein. Die Erfindung ist nicht auf die Ausführungsbeispiele bzw. -formen beschränkt.

Die Ausführungsbeispiele bzw. Ausführungsformen sind schematisch in den nachfolgenden Figuren dargestellt. Hierbei bezeichnen gleiche Bezugsziffern in den Figuren gleiche oder funktionsgleiche Elemente bzw. hinsichtlich ihrer Funktionen einander entsprechende Elemente.

Zur Veranschaulichung und ohne einschränkende Wirkung ergeben sich weitere Merkmale und Vorteile der Erfindung aus der Beschreibung der **beigefügten** Zeichnungen. Darin zeigen:

**Fig. 1**  eine schematische Darstellung einer ersten Ausführungsform eines erfindungsgemäßen Verfahrens gemäß Anspruch 1;

**Fig. 2**  eine schematische Darstellung eines beispielhaften, trapezförmigen, bipolaren Hochspannungsimpulses mit zwei Hochspannungsimpulshalbwellen;

**Fig. 3**  eine schematische Darstellung dreier exemplarischer Elektrodenanordnungen; und

**Fig. 4**    eine schematische Darstellung von fünf exemplarischen Hochspannungsimpulsformen.

**Detaillierte Beschreibung**

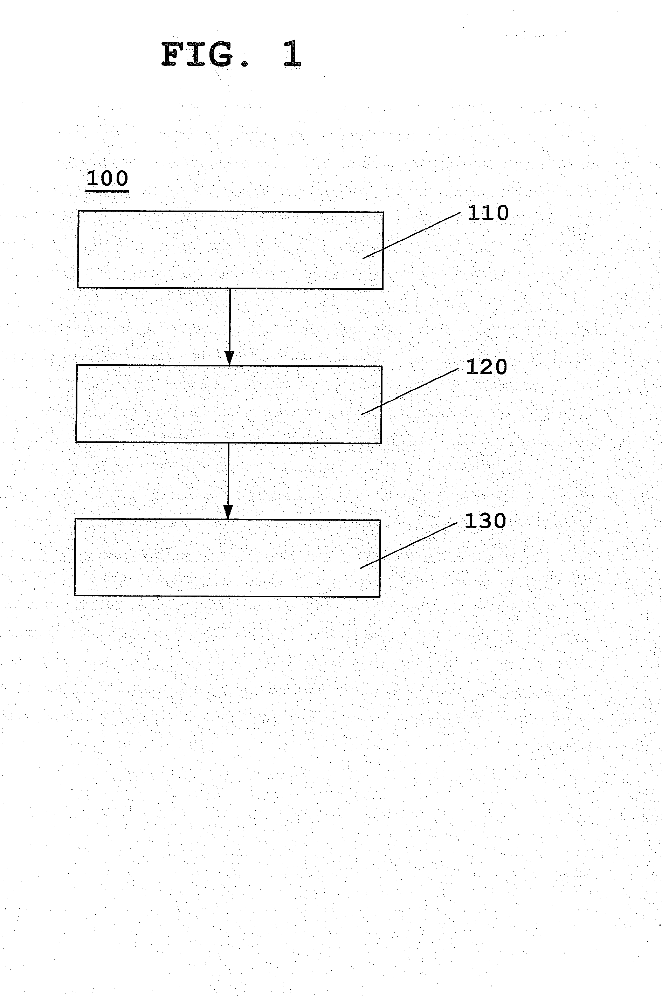

FIG. 1 zeigt schematisch eine Ausführungsform eines Verfahrens **(100)** zur mikrobiellen Desinfektion einer wasserbasierten Dispersion mit flüssigen und/oder festen Inhaltsstoffen. Dabei umfasst das Verfahren **(100)**: Bereitstellen **(110)** von mindestens zwei Elektroden, die derart zueinander angeordnet sind, dass zwischen ihnen die Dispersion ein- oder durchleitbar ist; Ein- oder Durchleiten **(120)** der Dispersion zwischen die Elektroden; und Beaufschlagen **(130)** der Elektroden mit einer zuvor wählbaren elektrischen Potentialdifferenz. Das Beaufschlagen **(130)** wird derart gewählt, dass eine Folge von zumindest zwei elektrischen Hochspannungsimpulshalbwellen mit gegensätzlicher Polarität zwischen den Elektroden durch die Dispersion gebildet wird. Dabei sind die Hochspannungsimpulshalbwellen über die Potentialdifferenz jeweils mittels zuvor wählbarer Impulsform, Impulsdauer, Impulsamplitude und Repetitionsfrequenz anpassbar. Die Impulsdauer wird hierbei in einem Bereich von 200 ns bis zu 10 $\mu$s und die Impulsamplitude in einem Bereich von 10 kV/cm bis zu 100 kV/cm sowie die Repetitionsfrequenz in einem Bereich von 1 Hz bis 100 kHz gewählt. Die Hochspannungsimpulshalbwellen in der Folge werden derart gebildet, dass die Abweichung zwischen dem Gesamtbetrag der positiven und negativen Teilladungen höchstens 10 % beträgt bezogen auf den jeweils größeren Teilladungsbetrag von positiven und negativen Teilladungen. Der zeitliche Abstand zwischen zwei Hochspannungsimpulshalbwellen beträgt dabei höchstens die 10-fache Dauer der ersten Hochspannungsimpulshalbwelle.

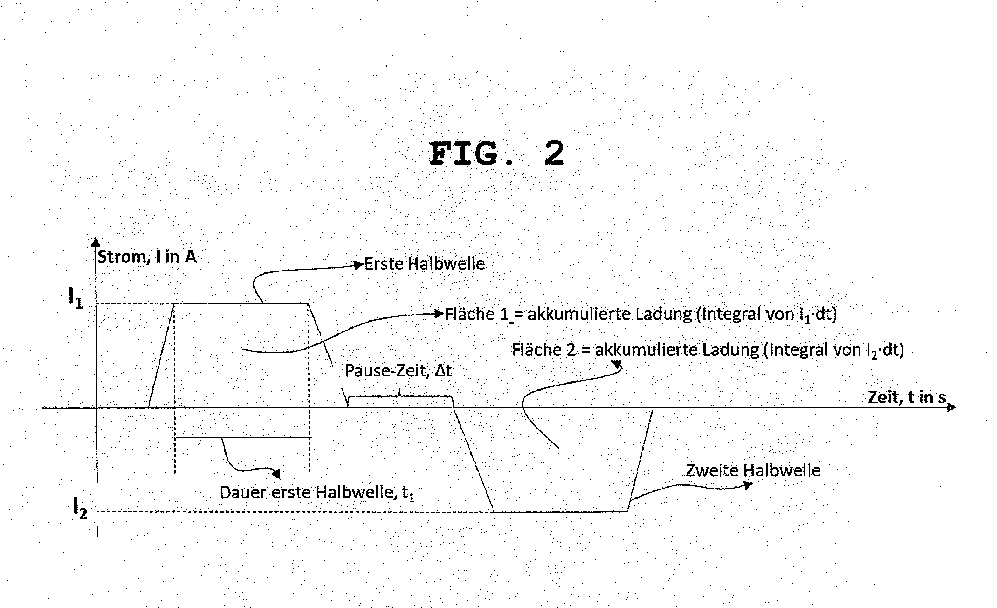

FIG. 2 zeigt den zeitlichen Verlauf des Stromflusses (I) während eines beispielhaften bipolaren, diskontinuierlichen, trapezförmige Hochspannungsimpuls bestehend aus einer positiven und negativen Hochspannungsimpulshalbwelle, wobei die negative Halbwelle auch zuerst erfolgen kann und wobei der Hochspannungsimpuls auch mit anderen Impulsformen gebildet werden kann (vgl. FIG. 4), mit den folgenden Merkmalen: Amplitude des Stromflusses $I_1$ bzw. $I_2$, Impulshalbwellendauern $\Delta t_1$ bzw. $\Delta t_2$, Fläche 1 = Fläche 2, zugelassene Abweichung max. 10%. Pausenzeit ($\Delta t$) bevorzugt gegen Null, jedoch nicht länger als die 10-fache Dauer einer Halbwelle. Bekannt ist, dass ab 2 $\mu$s Dauer (Pause/Intervall, $\Delta t$ = 2 $\mu$s), die parasitären Reaktionen bereits stattfinden.

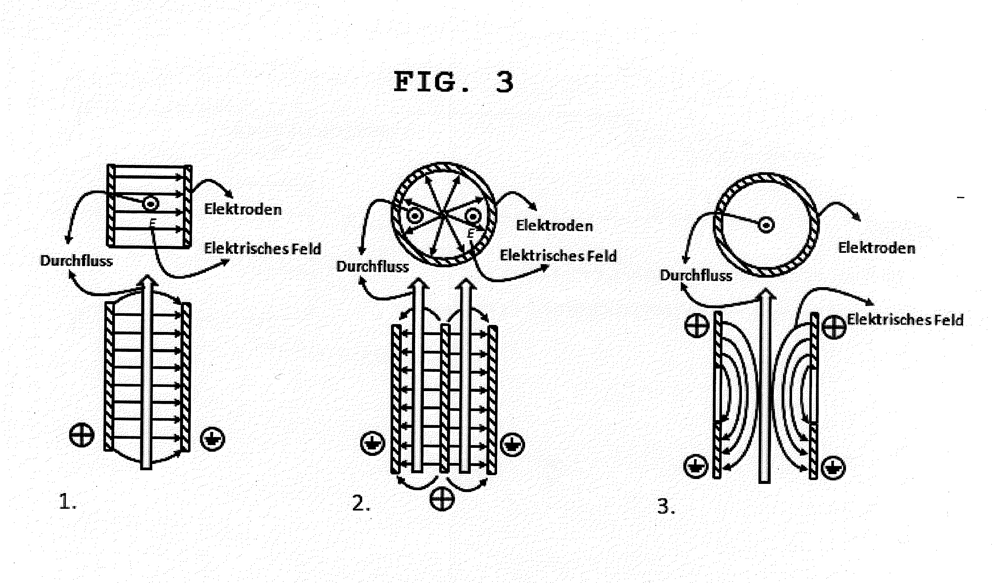

FIG. 3 zeigt verschiedene Elektroden-Konfigurationen im Behandlungsreaktoren (siehe Dissertation **[14]**, Seite 29, Figur 2.10) für die Elektroimpulsbehandlung im Durchfluss (Querschnitt Zeichnung): 1. planparallele Elektroden, 2. koaxial Anordnung und 3. kollineare Anordnung.

FIG. 4 zeigt typische bipolare Impulsformen (siehe **[15]**, Seite 8, Abb. 3) die zu Anwendung kommen können: (1) bipolar, diskontinuierlich trapezförmig, (2) bipolar, diskontinuierlich dreieckförmig, (3) bipolar, diskontinuierlich rechteckförmig, (4) bipolar, diskontinuierlich exponentiell und (5) bipolar, diskontinuierlich sinusförmig.

**Bezugszeichenliste**

**100**    Verfahren zur mikrobiellen Desinfektion bzw. Keimreduktion von wasserbasierter Dispersion mit flüssigen und/oder festen Inhaltsstoffen

**110**    Bereitstellen von mindestens zwei Elektroden

**120**    Ein- oder Durchleiten von wasserbasierter Dispersion mit flüssigen und/oder festen Inhaltsstoffen zwischen die Elektroden

**130**    Beaufschlagen der Elektroden mit einer zuvor wählbaren elektrischen Potentialdifferenz

**Literaturliste**

**[1]** .......... US 2019 0 308 311 A1

**[2]** .......... W. Frey, C. Gusbeth, T. Schwartz (2013) "Inactivation of Pseudomonas putida by Pulsed Electric Field Treatment: A Study on the Correlation of Treatment Parameters and Inactivation Efficiency in the Short-Pulse Range", Journal of Membrane Biology, 05/2013

**[3]** ..........Keith, W. D., Harris, L. J., & Griffiths, M. W. (1998). "Reduction of bacterial levels in flour by pulsed electric fields". J. Food Proc. Eng., 21,263-269.

**[4]** .......... J. Raso, W. Frey, G. Ferrari, G. Pataro, D. Knorr, J. Teissié, D. Miklavčič, "Recommendations guidelines on the key information to be reported in studies of application of PEF technology in food and biotechnological processes", Innovative Food Science & Emerging Technologies, Volume 37, Part C, 2016, Pages 312-321, ISSN 1466-8564 https://doi.org/10.1016/j.ifset.2016.08.003

[5] ..........Kotnik, T., Miklavčič, D., & Mir, L. M. (2001). "Cell membrane electropermeabilization by symmetrical bipolar rectangular pulses". Part II. Reduced electrolytic contamination, Bioelectrochemistry, 54, 91-95.

[6] .......... WO 2000 062 822 A1

[7] .......... WO 2000 062 821 A1

[8] .......... WO 2000 063 355 A1

[9] .......... WO 2002 033 065 A3

[10] ........ US 2015 0 114 913

[11] ........ US 2004 0 022 669

[12] ........EP 2 543 254

[13] ........ US 2016 0 031 728

[14] ........Dissertation: Toepfl, Stefan. (2006). Pulsed Electric Fields (PEF) for Permeabilization of Cell Membranes in Food-and Bioprocessing Applications, Process and Equipment Design and Cost Analysis. 10.14279/depositonce-1441; page 29, Figure 2.10.

[15] ........ Master-Thesis: Führer, Rudolf. (2012). Einfluss von Hochspannungsimpulsen auf die Eigenschaften von Kartoffelstärke und -textur. urn:nbn:de:gbv:519-thesis2012-0631-5, Seite 8, Abb. 3.

[16] ........ Morren, J.; Roodenburg, B.; de Haan, S.W.H.; (2003). Electrochemical reactions and electrode corrosion in pulsed electric field (PEP) treatment chambers. Innovative Food Science & Emerging Technologies, Volume 4 (Issue 3), Pages 285-295. https://doi.Org/10.1016/S1466- 8564(03)00041-9.

**Patentansprüche**

1. Verfahren **(100)** zur mikrobiellen Desinfektion einer wasserbasierten Dispersion mit flüssigen und/oder festen Inhaltsstoffen, umfassend:

   **a.** Bereitstellen **(110)** von mindestens zwei Elektroden, die derart zueinander angeordnet sind, dass zwischen ihnen die Dispersionein- oder durchleitbar ist;

   **b.** Ein- oder Durchleiten **(120)** der Dispersion zwischen die Elektroden; und

   **c.** Beaufschlagen **(130)** der Elektroden mit einer zuvor wählbaren elektrischen Potentialdifferenz derart, dass eine Folge von zumindest zwei elektrischen Hochspannungsimpulshalbwellen gegensätzlicher Polarität zwischen den Elektroden durch die Dispersion gebildet wird,

   wobei:

   **i.** die Hochspannungsimpulshalbwellen über die Potentialdifferenz jeweils mittels zuvor wählbarer Impulsform, Impulsdauer, Impulsamplitude und Repetitionsfrequenz anpassbar sind,

   **ii.** die Impulsdauer in einem Bereich von 200 ns bis zu 10 $\mu$s und die Impulsamplitude in einem Bereich von 10 kV·cm$^{-1}$ bis zu 100 kV·cm$^{-1}$ sowie die Repetitionsfrequenz in einem Bereich von 1 Hz bis 100 kHz gewählt wird,

   **iii.** die Hochspannungsimpulshalbwellen in der Folge derart gebildet werden, dass die Abweichung zwischen dem Gesamtbetrag der positiven und negativen Teilladungen höchstens 10 % beträgt bezogen auf den jeweils größeren Teilladungsbetrag von positiven und negativen Teilladungen, und

   **iv.** der zeitliche Abstand zwischen zwei Hochspannungsimpulshalbwellen höchstens die 10-fache Dauer der ersten Hochspannungsimpulshalbwelle beträgt.

2. Verfahren gemäß Anspruch 1, wobei ferner die Abweichung zwischen dem Gesamtbetrag der positiven und negativen Teilladungen höchstens 5% beträgt.

3. Verfahren gemäß Anspruch 1, wobei ferner die Abweichung zwischen dem Gesamtbetrag der positiven und negativen Teilladungen 0% beträgt.

4. Verfahren gemäß einem der Ansprüche 1 bis 3, wobei ferner der zeitliche Abstand zwischen zwei Hochspannungsimpulshalbwellen gleich 0 ist.

5. Verfahren gemäß einem der Ansprüche 1 bis 4, wobei ferner die Dispersion ein Elektrotauchlack für die kathodische und anodische Tauchlackierung ist.

6. Verfahren gemäß einem der Ansprüche 1 bis Anspruch 5, wobei ferner die Dispersion zumindest eine Dispersion aus der Gruppe von mit flüssigen und/oder festen Inhaltsstoffen umfasst bzw. daraus gebildet ist, wobei diese Gruppe umfasst: Kühlwasser, VE-Wasser, industrielles Wasser, Abwasser, Spülwasser aus Waschanlagen, flüssige Lebensmittel, Trinkwasser, Milch, Saft oder Suppen.

7. Verwendung eines der Verfahren gemäß einem der Ansprüche 1 bis 5 in einer kathodischen und anodischen Tauchlackierung.

**Claims**

1. Method (100) for the microbial disinfection of a water-based dispersion with liquid and/or solid ingredients, comprising:

   a. providing (110) at least two electrodes, which are arranged in relation to one another in such a way that the dispersion can be guided in between them or through them;
   b. guiding (120) the dispersion in between or through the electrodes;
   and
   c. imposing (130) on the electrodes a preselectable electrical potential difference in such a way that a sequence of at least two electrical high-voltage pulse half-waves of opposing polarity is formed between the electrodes by the dispersion,
   wherein:

      i. the high-voltage pulse half-waves can be adjusted over the potential difference in each case by means of preselectable pulse shapes, pulse duration, pulse amplitude, and repetition frequency,
      ii. the pulse duration is selected in a range from 200 ns to 10 $\mu$s, and the pulse amplitude in a range from 10 kV . cm$^{-1}$ to 100 kV . cm$^{-1}$, and the repetition frequency in a range from 1 Hz to 100 Hz,
      iii. The high-voltage pulse half-waves in the sequence are formed in such a way that the deviation between the sum total of the positive and negative part loads amounts to a maximum of 10% in relation to the respective greater part load value of positive and negative part loads, and
      iv. the time interval between two high-voltage pulse half-waves amounts at the most to 10 times the duration of the first high-voltage pulse half-wave.

2. Method according to claim 1, wherein, further, the deviation between the sum total of the positive and negative part loads amounts to a maximum of 5%.

3. Method according to claim 1, wherein, further, the deviation between the sum total of the positive and negative part loads amounts to 0%.

4. Method according to any one of claims 1 to 3, wherein, further, the time interval between two high-voltage pulse half-waves is equal to 0.

5. Method according to any one of claims 1 to 4, wherein, further, the dispersion is an electronic immersion lacquer for cathodic and anodic dip immersion lacquer application,

6. Method according to any one of claims 1 to 5, wherein, further, the dispersion comprises at least one dispersion from the group with liquid and/or solid ingredients, or is formed from this group, wherein this group comprises: Cooling water, fully demineralised water, industrial water, waste water, flushing water from washing systems, liquid foodstuffs, drinking water, milk, juice, or soups.

7. Use of one of the methods according to any one of claims 1 to 5 in a cathodic and anodic immersion lacquering process.

**Revendications**

1. Procédé **(100)** de désinfection microbienne d'une dispersion à base d'eau à l'aide d'ingrédients liquides et/ou solides comprenant :

**a.** se procurer **(110)** au moins deux électrodes, qui sont disposées l'une par rapport à l'autre de manière à ce que la dispersion puisse entrer ou passer entre elles ;
**b.** faire entrer ou passer **(120)** la dispersion entre les électrodes ;
et
**c.** appliquer **(130)** aux électrodes une différence de potentiel électrique pouvant être sélectionnée à l'avance, de manière à former, par la dispersion entre les électrodes, une succession de demi-ondes d'impulsion de haute tension électrique de polarité opposée,
dans lequel :

**i.** les demi-ondes d'impulsion de haute tension peuvent être adaptées par la différence de potentiel, respectivement au moyen de forme d'impulsion, de durée d'impulsion, d'amplitude d'impulsion et de fréquence de répétition pouvant être choisie à l'avance,
**ii.** on choisit la durée d'impulsion dans une plage de 200 ns jusqu'à 10 $\mu$s et l'amplitude d'impulsion dans une plage de 10 kV $\cdot$cm$^{-1}$ jusqu'à 100 kV $\cdot$cm$^{-1}$ ainsi que la fréquence de répétition dans une plage de 1 Hz à 100 kHz,
**iii.** on forme les demi-ondes d'impulsion de haute tension de la succession, de manière à ce que l'écart entre le montant total des charges partielles positives et négatives s'élève au plus à 10 % rapporté au montant de charges partielles respectivement le plus grand de charges partielles positives et négatives,
et
**iv.** la distance dans le temps entre deux demi-ondes d'impulsion de haute tension représente au plus 10 fois la durée de la première demi-onde d'impulsion de haute tension.

**2.** Procédé suivant la revendication 1, dans lequel en outre l'écart entre le montant total des charges partielles positives et négatives s'élève au plus à 5 %.

**3.** Procédé suivant la revendication 1, dans lequel en outre l'écart entre le montant total des charges positives et négatives s'élève à 0 %.

**4.** Procédé suivant l'une des revendications 1 à 3, dans lequel en outre la distance dans le temps entre deux demi-ondes d'impulsion de haute tension est égale à 0.

**5.** Procédé suivant l'une des revendications 1 à 4, dans lequel en outre la dispersion est un vernis d'électro-immersion pour le vernissage par immersion cathodique et anodique.

**6.** Procédé suivant l'une des revendications 1 à la revendication 5, dans lequel en outre la dispersion comprend au moins une dispersion du groupe à l'aide d'ingrédients liquides et/ou solides ou en est constituée, dans lequel ce groupe comprend : de l'eau de refroidissement, de l'eau VE, de l'eau industrielle, de l'eau résiduaire, de l'eau de lavage d'installations de lavage, des denrées alimentaires liquides, de l'eau potable, du lait, du jus ou des soupes.

**7.** Utilisation de l'un des procédés suivant l'une des revendications 1 à 5, dans un vernissage par immersion cathodique et anodique.

# FIG. 1

100

# FIG. 2

FIG. 3

# FIG. 4

(1)

(2)

(3)

(4)

(5)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20190308311 A1
- WO 2000062822 A1
- WO 2000062821 A1
- WO 2000063355 A1
- WO 2002033065 A3
- US 20150114913 A
- US 20040022669 A
- EP 2543254 A
- US 20160031728 A

**In der Beschreibung aufgeführte Nicht-Patentliteratur**

- **W. FREY ; C. GUSBETH ; T. SCHWARTZ**. Inactivation of Pseudomonas putida by Pulsed Electric Field Treatment: A Study on the Correlation of Treatment Parameters and Inactivation Efficiency in the Short-Pulse Range. *Journal of Membrane Biology*, 2013
- **KEITH, W. D. ; HARRIS, L. J. ; GRIFFITHS, M. W.** Reduction of bacterial levels in flour by pulsed electric fields. *J. Food Proc. Eng.*, 1998, vol. 21, 263-269
- **TOEPFL, STEFAN**. *Pulsed Electric Fields (PEF) for Permeabilization of Cell Membranes in Food-and Bioprocessing Applications, Process and Equipment Design and Cost Analysis*, 2006, 29
- **FÜHRER, RUDOLF**. *Einfluss von Hochspannungsimpulsen auf die Eigenschaften von Kartoffelstärke und -textur*, 2012
- **MORREN, J. ; ROODENBURG, B. ; DE HAAN, S.W.H.** Electrochemical reactions and electrode corrosion in pulsed electric field (PEP) treatment chambers. *Innovative Food Science & Emerging Technologies*, 2003, vol. 4 (3), 285-295, https://doi.Org/10.1016/S1466- 8564(03)00041-9